# EUROPEAN PATENT APPLICATION

(11) **EP 0 546 312 A1**
(43) Date of publication of application: **16.06.1993**
(21) Application number: 92118752.2
(22) Date of filing: 02.11.1992
(51) Int. Cl.: G11B 5/11, G11B 5/48, G11B 5/596

(54) **Cancellation of the effects of stray magnetic fields on magnetic heads in a disc drive**

(30) Priority: 10.12.1991 US 804648
(71) Applicant: HEWLETT-PACKARD COMPANY, Palo Alto, California 94304-1181 (US)
(72) Inventor: Hanks,Mitchel D., Boise Idaho 83704 (US); Covault,Michael L., Eagle Idaho 83616 (US); Day,Clifford K., Meridian Idaho 83642 (US); Sommons,Ralph F.Fr., Boise Idaho 83704 (US)
(74) Representative: Baillie, Iain Cameron

(57) **Abstract**

A disk drive in which at least one head assembly (3) comprises two electromagnetically sensitive electromagnetic heads (3a,3b), one of which (3b) is sensitive to recorded disk tracks and one (3a) of which is not. The coils (3a2,3b2) of the two electromagnetic heads (3a,3b) are connected in electrical opposition (1f). Each responds to unwanted electromagnetic radiation or fields and produce proportional voltages that are electrically opposed to one another without rejecting information derived from the recorded tracks.

## Description

### Technical Field

This invention relates generally to disk memory drives and more particularly to a dedicated servo type of disk drive in which the effect of any unwanted electromagnetic fields linking an electromagnetic head is eliminated by the technique of common mode interference signal rejection within the electromagnetic head.

### Background of the Invention

Increasing data density recording requirements in disk drives have resulted in efforts to produce thinner disks with smoother disk surfaces so that the flying heights of the electromagnetic heads may be reduced. Lower flying heights reduce the spread of the electromagnetic recording field during a recording operation and reduce the size of the recorded magnetic bits. Resolution in the read back mode is also increased, which makes it possible to increase the recording density. Glass or ceramic disk substrates have smoother surfaces, but being of non-metallic material do not provide adequate shielding, for example, for the electromagnetic fields produced by the data heads, during data recording, which link the servo head. These heads are typically aligned on the same track cylinder, on opposite faces of a disk, and the disk being made of thin layers of permanent magnetic material on a non conductive substrate do not provide eddy current shielding as do conventional aluminum disks.

Thinner aluminum disks are sometimes used to permit adding one or more disks in a given volume. Reducing the thickness of an aluminum disk, however, reduces the shielding effect which also introduces crosstalk problems.

Data head and servo head as used herein will be understood to mean data electromagnetic head and servo electromagnetic head, respectively.

In a disk drive having a disk surface which is dedicated to servo code, the servo code tracks are aligned with corresponding data tracks on the opposite surface of the disk, defining track cylinders. Thus track selection and track following take place on the disk surface dedicated to servo code. A data head is usually positioned adjacent the top surface of the dedicated servo disk and is aligned with the servo head on the bottom face of the disk. The close proximity of the data head to the servo head requires expensive shielding, where glass disk, ceramic disks or very thin aluminum disks are used, to prevent crosstalk during data writing, i.e., linking of the coil or winding of the servo head by the electromagnetic field of the data head.

Other sources which radiate electromagnetic fields include the actuator drive motor and the motor which rotates the disks. These electromagnetic fields interfere with both servo and data transducing functions.

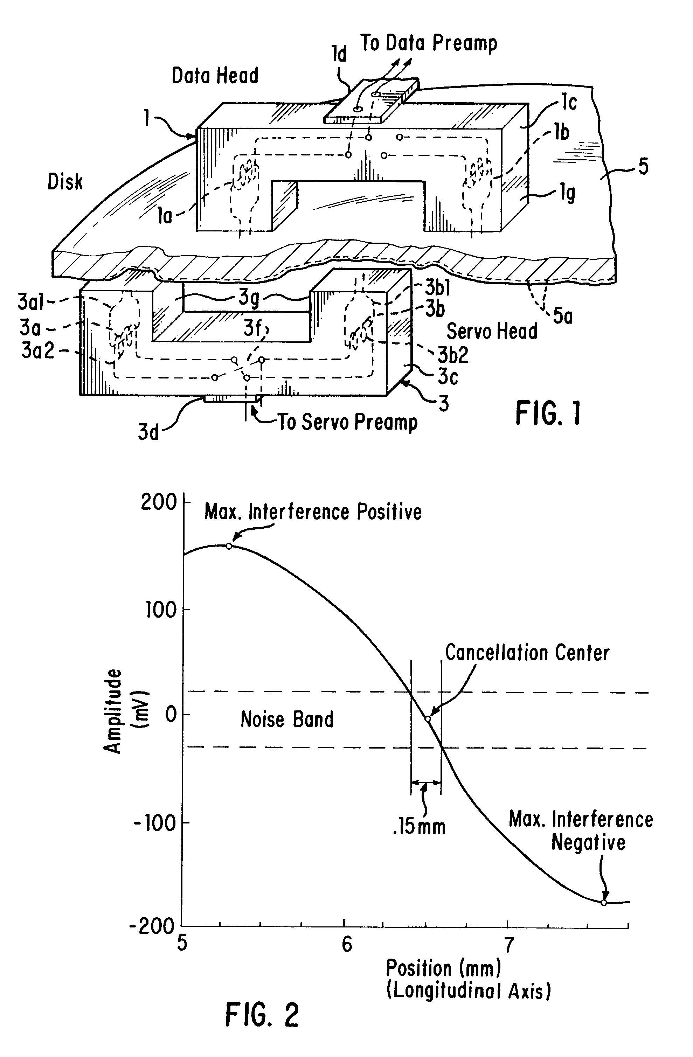

Signal correction, that is, the elimination of unwanted signal components from signals to be processed, by the technique of signal cancellation, is well known. This technique is useful in noise cancellation, for example. Examples of noise cancellation are discussed in a paper by Bernard Widrow, et al, entitled "Adaptive Noise Canceling: Principal and Applications, Proceedings of the IEEE, Vol. 63, No. 12, December 1975, which focuses on the specific case of adaptive noise cancellation. Points of interest in that paper include reference to Figs. 1, 2 and 3 and the text relating thereto which covers schematic diagrams of circuits representing adaptive noise cancellation concepts, their function and analysis: reference is made to the application of the noise canceling techniques in electrocardiography, in fetal electrocardiography, in the derivation and processing of the ECC signals in a heart transplant patient, and in the cancellation of noise in speech signals. Adaptive types of noise filters are also discussed. Signal cancellation by these techniques however, does not suggest ways to protect magnetic heads from stray fields.

An attempt to minimize stray fields which link the heads in a disk drive is described in U.S. Patent 4,669,013. Here, a linear motor is employed to drive an actuator or arm stack structure which supports, moves and positions the heads. The motor is designed to reduce the stray magnetic fields produced during motor operation. A plurality of electromagnetically opposed coils mounted on one motor part produce electromagnetic fields which interact with sets of alternately polled magnets on the other motor part. Thereby the extent of the radiated motor field is stated to be reduced and, according to the illustration, the electromagnetic field of the motor is largely confined to the region of the actuator or arm stack structure removed from the magnetic heads.

U.S. Patent 4,843,506, takes a different approach and describes an arrangement in which shielding is provided on the magnetic head. This is probably the more desirable approach of those discussed here, assuming the shielding is effective, and that cost and weight are minimal. Specifically, the magneto resistive heads described in this patent are provided with effective shielding by employing shields exhibiting a low reluctance to fields from the recording media to which the magnetic head is desirably sensitive and exhibiting a high reluctance to external fields for which shielding of the magnetic head is desired.

### Summary of the Invention

A reduction in interference with servo code transducing functions and data read write functions in an electromagnetic head of a disk drive is achieved by the technique of common mode interference signal rejection within the magnetic head. To cancel the unwanted signal radiating from a nearby data head, or other source of electromagnetic disturbance, this invention makes use of the phenomenon of common mode interference signal rejection, wherein an output is formed by subtracting the voltage of one of two channels from that of the other, causing rejection of like signals appearing in both channels and allowing passage of differing signals. According to this invention, the two channels are two electromagnetic transducers which are built into one magnetic head assembly, to be used as a servo head or a data head. One of the elements is designed for optimal pick-up of local magnetic signals on a disk surface, while the other is designed to be insensitive to the disk surface. Both electromagnetic elements, however, are designed to be sensitive to stronger electromagnetic fields which extend up to the coils of the elements themselves. In a given electromagnetic field, both elements will produce a voltage of polarity corresponding to the orientation of the field. In order to cancel this induced voltage, the terminals of one element are connected to the terminals of opposite polarity of the other element, i.e., in electrical opposition. The result of this configuration is an electromagnetic head that is sensitive to the magnetic information local to one specified electromagnetic element but which rejects magnetic information radiating to both of the electromagnetic heads within the single head structure.

### Brief Description of the Drawings

The invention will be better understood by reference to the following specification when considered in conjunction with the accompanying drawings, in which:
Fig. 1 is an isometric view of a fragmentary portion of a disk drive embodying electromagnetic heads according to this invention.
Fig. 2 is an interference signal plot which plots signal amplitude in millivolts as a function of head position in millimeters with respect to the longitudinal axis, and
Figs. 3 and 4 schematically depict end views of data and servo electromagnetic heads in positions on adjacent opposite surfaces of a disk in a disk drive.

### Detailed Description of the Preferred Embodiment

Although this invention may be practiced with any electromagnetic head structure for a disk drive, the best mode for practicing this invention which is presently contemplated is that which employs thin film electromagnetic heads. As seen in Fig. 1, each head, a data head 1 and a servo head 3, positioned adjacent opposite surfaces of a disk 5, comprises two electromagnetic heads 1 a and 1 b, respectively, for the data head 1, and 3a and 3b, respectively, for the servo head 3. These pairs of electromagnetic heads are each mounted on a slider body 1 c and 3c, respectively. These slider bodies typically fly on the thin film of air, called an air bearing, clinging to and moving with the surface of the disk 5 as the disk rotates. The individual heads are supported in the positions illustrated, adjacent the opposite surfaces of the disk 5 by respective flexures 1 and 3d, forming part of an actuator structure which controls movement of the respective heads, in both track seeking and track following functional modes, as is well known. In the data head 1, only one of the two electromagnetic heads 1 a and 1 b is connected to an external circuit system, for example, the data preamplifier forming part of a data signal processing and demodulating circuit coupled to a host computer. None of these circuits are illustrated since they do not form a part of this invention. With respect to the servo head 3, the electromagnetic head 3b comprises a full pole structure 3b1 sensing the tracks 5a of servo code. The other electromagnetic head 3a comprises a reduced pole structure 3a1, having pole ends or faces removed from a position to be linked by the fields of magnetic recordings, which is not capable of sensing the tracks of servo code 5a. The coils 3a2 and 3b2 of these respective electromagnetic heads are connected in electrical opposition, by connecting terminals of opposite polarity together, an example of which is seen at the terminal interconnections at 3f in the servo head 3. The coil terminals are connected to a servo preamp in a servo control system (not shown).

It is a common practice in the manufacture of thin film heads, such as those characterized in Fig. 1, to build these with one electromagnetic transducer element located on each side of the head. As is well known these heads are provided with slider bodies which have slider rails, such as the rails 1 and 3g seen in Fig. 1. Two electromagnetic heads are located on each side of the head at the slider rails. A head assembly having two electromagnetic heads therein or thereon is virtually certain to have at least one usable electromagnetic head. Thus, very few thin film heads need to be scraped, and yields are increased. This makes the thin film head a very suitable candidate for manufacture of the common-mode rejecting head assembly. By processing one electromagnetic head to have a withdrawn or partial or reduced pole assembly, such as the pole structure seen in the electromagnetic head 3a, in which the pole ends are recessed from the surface of the slider of the head, the electromagnetic head thus altered can be made insensitive to magnetic information recorded in the tracks on the disk surface. The contacts or terminals associated with each coil are cross-wired, that is the coils are connected in electrical opposition, as is shown in Fig. 1, and a single pair of terminals carries the head signal from the head out to the pre-amplifier. This configuration, it will be appreciated, rejects signals that are induced in the respective coils at equal levels by the electromagnetic fields radiating from unwanted electromagnetic disturbance sources. As seen in Fig. 1, the electromagnetic fields from a writing (data) head, for example, will be received at equal levels if the writing pole structure of the writing electromagnetic element is centered between the two electromagnetic heads of the servo head 3.

Fig. 2 shows a plot of the amplitude of the amplified crosstalk signal as a function of position of the servo head. It is seen that the condition for optimal cancellation is when the writing (data) electromagnetic head 1 a is centered between the two servo electromagnetic heads 3a, 3b. There is, however, a range of acceptability wherein sufficient cancellation is achieved which allows errors in the centering of the writing element and thus this approach does not require precision alignment for satisfactory performance. By increasing the loop area, that is, the number of turns of one coil with respect to the other, for example, increasing the number of turns of the coil 3a2 on that electromagnetic head 3a having the reduced pole structure 3a1, the inductive reactance of the coil 3a2 can be adjusted to produce a signal which matches that from the coil 3b2 for other relative positions radially of the data head with respect to the servo head including alignment of the heads.

The thin film head is described as a preferred embodiment representing the best presently known mode for practicing this invention, but it will be apparent to those skilled in the art that other than thin film electromagnetic transducer designs could be employed as well. All that is necessary is that two electromagnetically sensitive elements or heads, one of which is sensitive to the magnetic recordings and the other of which is not, be located such that they pick up unwanted electromagnetic interference and produce proportional voltages that can be combined in some way to reject the disturbances without rejecting disk surface information.

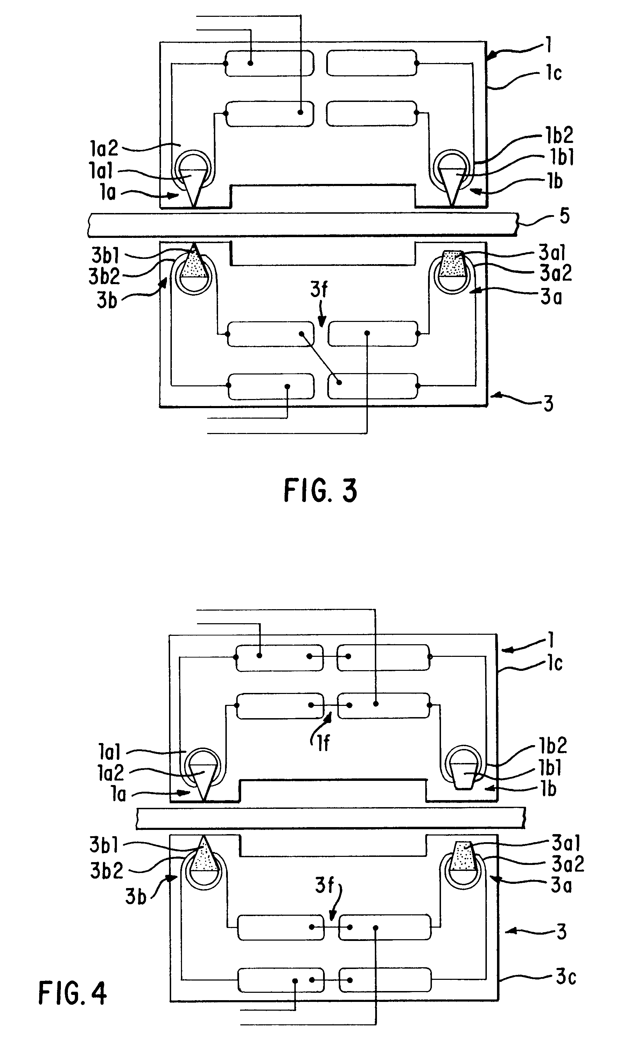

Fig. 3 shows the track sensor elements of the data head and the servo head positioned at tracks in the same track cylinder on the disk 5. The electromagnetic head 3a of the servo head 3, having the reduced pole structure which does not sense the servo code tracks, is provided with a coil 3a2 having extra coil turns, in this instance, so that in its position in the weaker portion of the stray electromagnetic field, when writing by the data head is in progress, it will have an induced voltage in the winding 3a2 which is equal and opposite to that of the winding 3b2. In Fig. 3, one form of cross connection 3f of the coils 3a2 and 3b2, which places the induced voltages in electrical opposition, is illustrated. In the data head 1, only one of the coils is connected to the external circuit. The other remains open circuit on the head and is therefore nonfunctional.

In Fig. 4, the pole structure 1 b1 of the data electromagnetic head 1 b has been altered so that it is no longer functional in sensing the data tracks. The coil 1 b2 of this pole structure, like the coil 3a2 of the similarly altered pole structure 3a1 of the servo head 3, is now connected in electrical opposition at 1 with the coil la2 of the active pole structure 1 a1 of the data head 1. In this structural arrangement of the data head 1 and the servo head 3, interference signal rejection results in the servo head with respect to the stray magnetic field resulting from data writing, and in both heads from stray or external magnetic fields from any source within the disk drive, which link the several electromagnetic heads and which induce voltages therein. Since such stray fields degrade the transducing functions of both the servo head and the data head, it is useful to connect both electromagnetic heads of the data head as well as those of the servo head in electrical opposition for the purpose of canceling or rejecting such unwanted induced voltages.

Thus by employing a head assembly provided with two electromagnetic heads, in which only one electromagnetic head is sensitive to the magnetic recordings in the tracks on the disk surface adjacent that magnetic head, yet with both elements sensitive to electromagnetic fields radiating from unwanted electromagnetic sources and cross wiring and/or connecting the electromagnetic heads to cancel voltages induced in the electromagnetic heads by these unwanted electromagnetic fields, it is possible to pass only those signals induced in that head which is sensitive to the magnetic recordings in the tracks on the disk surface.

Although the invention has been described in connection with thin films heads as the best mode for practicing the invention, it will be apparent that magnetic heads assembled of discrete parts, as distinguished from thin film deposition, may be similarly constructed for the purpose of cancellation of unwanted signals.

## Claims

1. A magnetic head assembly for use with a media having magnetic recordings therein, comprising:
a. a body (3c);
b. a first electromagnetic head (3b) on said body having a full pole structure (3b1) for sensing said magnetic recordings and a coil (3b2) electromagnetically coupled to said
full pole structure (3b1);
c. a second electromagnetic head (3a) on said body (3c) having a reduced pole structure (3b1) insensitive to said magnetic recordings and a coil (3b2) electromagnetically coupled to said reduced pole structure (3b1), and
d. means (3f) for cross connecting said coils (3a2,3b2) in electrical opposition.

2. The invention according to claim 1, in which:
a. said full pole structure (3b1) comprises a pole end adjacent a surface of said body (3c), and
b. said reduced pole structure (3b1) has a pole end removed from said surface of said body (3c).

3. The invention according to claim 2, in which:
a. said coil (3b2) of said first electromagnetic head (3b) is disposed about at least a portion of said full pole assembly (3b1), and
b. said coil (3a2) of said second electromagnetic head (3a) is disposed about at least a portion of said reduced pole assembly (3a1).

4. The invention according to claim 1, in which:
a. said means (3f) for cross connecting said coils (3al,3bl) comprises terminals connected to said coils (3a1,3b1) and circuits connected to said terminals for connecting said coils (3a1,3b1) in electrical opposition.

5. A disk drive comprising:
a. a rotatable disk (5) having tracks recorded on one surface thereof;
b. a body (3c) having two electromagnetic heads (3a,3b), only one of which is capable of sensing recorded tracks;
c. means (3d) supporting said body (3c) adjacent said one surface so that said one electromagnetic head (3b) may sense said tracks; and
d. circuit means (3f) connecting said electromagnetic heads (3a,3b) in electrical opposition.

6. A disk drive, comprising:
a. a rotatable disk (5) having data tracks on one surface and servo code tracks on the opposite surface.
b. a data head (1) having an electromagnetic head (1 a);
c. means (1 d) supporting said data head adjacent said one surface;
d. a servo head (3) having two electromagnetic heads (3a,3b), only one (3b) of which senses said servo tracks;
e. means (3d) supporting said servo head
(3) adjacent said opposite surface with said two electromagnetic heads (3a,3b) in radially spaced positions in relation to said disk
(5) and in proximity said electromagnetic head (1 a) of said data head (1) to be linked
by the magnetic field thereof during writing
by said data head (1 a); and
f. circuit means (3f) connecting said two electromagnetic heads (3a,3b) in electrical opposition.

7. The invention according to claim 6, in which: a. said electromagnetic head (1 a) of said data head (1) is in a position adjacent said one surface which is radially intermediate said two electromagnetic heads (3a,3b) of said servo head (3) adjacent said opposite surface.

8. The invention according to claim 7, in which: a. said electromagnetic head (1 a) of said data head (1) is in a radial position adjacent said one surface of said disk (5) corresponding to the radial position of said one electromagnetic head (3b) of said servo head (3) adjacent said opposite surface of said disk (5).

9. The invention according to any one of claims 6-8 comprising:
a. a coil (3a2,3b2) on each of said two electromagnetic heads (3a,3b);
b. means (3f) connecting said coils (3a2,3b2) in electrical opposition, and
c. the coil (3a2) on that electromagnetic head (3a) of said two electromagnetic heads (3a,3b) which does not sense said servo tracks has a higher inductive reactance than the coil (3b2) of that electromagnetic head (3b) which senses said servo tracks.

10. The invention according to claim 9 in which the coil (3b2) of higher inductive reactance has more coil turns than the coil (3a2) of the other (3a2) of said two electromagnetic heads (3a,3b).

11. The invention according to any one of claims 6-10 in which:
a. said data head (1) comprises a second electromagnetic head (1b), and
b. circuit means (1f) connecting said second electromagnetic head (1b) in electrical opposition with said an electromagnetic head (1 a) of said data head (1).
